# EUROPEAN PATENT SPECIFICATION

(11) **EP 3 334 010 B1**
(45) Date of publication and mention of the grant of the patent: **13.12.2023**
(21) Application number: 16834570.0
(22) Date of filing: 28.07.2016
(51) Int. Cl.: H02K 1/22, H02K 1/27, H02K 1/278

(54) **ROTOR FOR USE IN MOTOR AND MOTOR ADOPTING SAME**
ROTOR ZUR VERWENDUNG BEI EINEM MOTOR UND MOTOR DAMIT
ROTOR DESTINÉ À ÊTRE UTILISÉ DANS UN MOTEUR ET MOTEUR L'ADOPTANT

(30) Priority: 07.08.2015 CN 201520589694 U
(43) Date of publication of application: 13.06.2018
(73) Proprietor: Robert Bosch GmbH, 70442 Stuttgart (DE)
(72) Inventor: LI, Weiya, 70442 Stuttgart (DE)
(86) International application number: PCT/CN2016/092070
(87) International publication number: WO 2017/024946

(56) References cited:
- EP-A1- 1 402 618
- EP-A1- 2 154 766
- CN-A- 103 078 416
- CN-U- 202 405 895
- CN-U- 203 416 057
- CN-U- 205 004 848
- JP-A- H0 479 741
- JP-A- H07 194 080
- JP-A- H11 220 847
- JP-A- 2006 254 599
- JP-A- 2007 336 771
- US-A1- 2013 187 507

## Description

### Technical Field

The present invention relates to electric motor technology, and specifically to a rotor for an electric motor and to an electric motor.

### Background Art

A rotor is an indispensable component of an electric motor. For an integrated electric motor, i.e., an electric motor with the rotor thereof being one-piece cast iron or steel, the eddy current loss is relatively large. When laminated steel is chosen as the rotor material, the eddy current loss can be reduced, but the cost is relatively high.

EP 2154 766 A1 discloses a permanent-magnet rotating electrical machine comprising a stator with an armature coil and a rotor that is arranged to rotate with a predetermined air gap with respect to the stator. The rotor has a rotor core. Permanent magnets are arranged inside the rotor core on an outer circumferential side, or at the surface of the rotor core. The permanent magnets each are divided into a plurality of segments in an axial direction along a dividing face. The dividing face and an end face of the permanent magnet acing a circumferential direction form acute angles to define narrowed areas and.

JP 2006 254599 A discloses an embedded magnet type motor equipped with a stator and a rotor which has a rotor core. A hole allowing a magnet to be arranged there is formed. The magnet consists of several parts one of which has an inclining surface.

JP H04 79741 A discloses a permanent magnet rotor with a pair of permanent magnets and arranged symmetrically to a rotary shaft.

JP H11 220847 A describes a ring shaped rotor yoke on which inner surface a plurality of yoke plates are arranged. Each yoke plate comprises a back yoke with grooves on one surface, and a plurality of magnet sheets disposed on the surface. The sheets are arranged in a stacked arrangement in which the short edges protrude from the surface.

EP 1 402 618 A1 discloses a rotor for an electric motor comprising a ring shaped core including apertures, wherein magnet plates are arranged on the outer circumferential surface of the core.

JP 2007 336771 A discloses a rotor for an electric motor comprising a core and a plurality of magnets arranged along an inner circumferential surface of the core. The inner circumferential surface of the core is provided with a plurality of annular grooves spaced apart from one another in an axial direction of the core.

JP H07 194080 A describes an electric motor which stator core is provided with grooves.

### Summary of the Invention

In view of this, the present invention provides a rotor for an electric motor that can effectively reduce the eddy current loss in accordance with claim 1.

The rotor for an electric motor according to the present invention comprises a ring shaped one-piece non-laminated rotor iron core having an inner surface, wherein a magnet area of the inner surface is provided with a groove to reduce eddy current losses. The rotor further comprises a magnet part, the magnet part being disposed in a magnet area of an inner surface of the iron core, the magnet part comprising a plurality of magnet sheets, wherein each magnet sheet has a rectangular circumferential shape which is defined by two long edges extending in parallel and two short edges extending parallel to each other and perpendicular to the long edges, wherein the magnet sheets are arranged adjacently in sequence along the inner surface of the iron core with the long edges bordering each other, and wherein the groove forms a certain angle with the longest edge of each magnet sheet in the magnet part.

According to an embodiment of the rotor, the magnet area is optionally provided with a plurality of grooves, and the plurality of grooves are uniformly distributed in the magnet area.

According to an embodiment of the rotor, the magnet area is optionally provided with one groove, and the groove is arranged in such a manner as to uniformly divide the magnet part.

According to the invention, the groove optionally forms an angle of 30 degrees with the longest edge of each magnet sheet.

The present invention further provides an electric motor in accordance with claim 4. The electric motor of the present invention comprises the foregoing rotor for an electric motor.

Using the rotor for an electric motor provided in the present invention it is possible to effectively reduce eddy current losses of the iron core and the magnet at a relatively low cost.

### Brief Description of the Drawings

Fig. 1 is a schematic structural diagram of a conventional rotor for an electric motor.
Fig. 2 schematically shows the eddy currents generated by a magnet sheet 22 when the electric motor is in operation.
Fig. 3 is a schematic representation of a part of a rotor for an electric motor according to an example not being part of the invention.
Fig. 4 schematically shows the eddy currents generated by the magnet sheet 22 when the electric motor according to an example not being part of the invention is in operation.
Fig. 5 is a schematic structural diagram of a part of a rotor for an electric motor according to yet another example not being part of the invention.
Fig. 6 is a schematic structural diagram of a part of a rotor for an electric motor according to an example of the present invention.

### Detailed Description of the Embodiments

The illustrative examples now be described with reference to the accompanying drawings, wherein like reference numerals refer to like elements. The examples described below facilitate the thorough understanding of the present invention by those skilled in the art, and are intended to be illustrative, but not restrictive. The representations of the elements, components, units and devices shown in the figures are not necessarily drawn to scale, and merely schematically indicate the relative relationships between the elements, components, modules and devices.

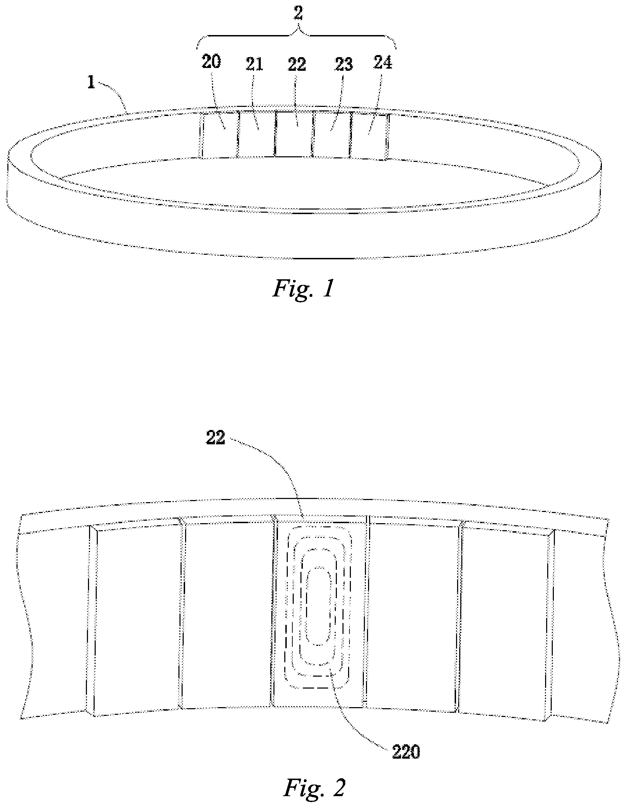

A rotor for an electric motor provided in the present inventionis mainly applied to an electric motor with a non-laminated rotor, that is, the rotor is formed of a single piece of cast iron or steel, and such an electric motor is also referred to as an integrated electric motor. When such an electric motor is in operation, both a magnet and an iron core of the rotor generate eddy currents, so as to increase the power loss and enable the rotor to generate heat, resulting in demagnetisation of the magnet. Fig. 1 is a schematic structural diagram of a conventional rotor for an electric motor. A magnet part 2 is disposed on an inner surface of an iron core 1, and the magnet part 2 generally comprises a plurality of magnet sheets, for example, magnet sheets 20, 21, 22, 23 and 24 in this example. The magnet sheets 20, 21, 22, 23 and 24 are arranged adjacently in sequence on the inner surface of the iron core 1, so as to form the magnet part. Fig. 2 schematically shows eddy currents 220 generated by the magnet sheet 22 in the rotor as shown in Fig. 1 when the electric motor is in operation. It may be understood that the same or similar eddy currents, although not shown, exist in other magnet sheets.

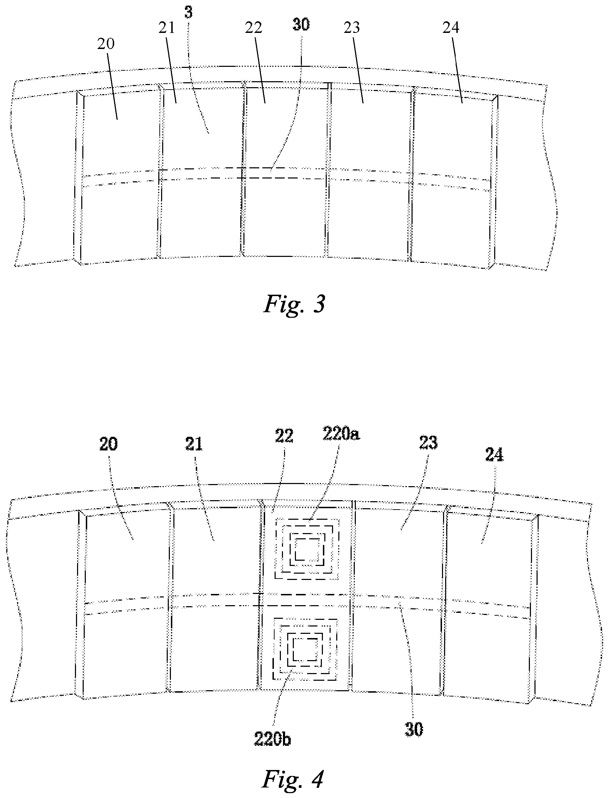

The rotor for an electric motor according to the present invention comprises an iron core and a magnet part. The magnet part is disposed in a magnet area of an inner surface of the iron core. Further, the magnet area is further provided with a groove, and the provided groove forms a certain angle with the longest edge of each magnet sheet in the magnet part. Fig. 3 is a schematic diagram of a part of a rotor for an electric motor according to an example not being part of the invention. As shown in the figure, an area of the inner surface of the iron core 1 where the magnet part is attached, i.e., a magnet area 3 of the inner surface of the iron core, is provided with a groove 30, and the groove 30 forms a certain angle with the longest edge of each magnet sheet forming the magnet part. In this example, which is not covered by the invention, the magnet part comprises magnet sheets 20, 21, 22, 23 and 24, and the groove 30 is perpendicular to the longest edge of each of the magnet sheets 20, 21, 22, 23 and 24. In practical applications, the groove 30 is covered by the disposed magnet part, and should not be shown. However, in order to illustrate more clearly, the groove 30 is shown with dotted lines in Fig. 3. Similarly, grooves are also shown with dotted lines in Figs. 4 to 6.

Fig. 4 schematically shows the eddy currents in the magnet sheet 22 when the electric motor is in operation. As shown in the figure, the eddy current in the magnet sheet 22 is divided into two eddy currents, i.e., eddy currents 220a and 220b, in the presence of the groove 30, wherein the eddy current 220a is located in the upper half part, while the eddy current 220b is located in the lower half part of the magnet sheet 22 divided by the groove. As such, the magnetic path of the eddy currents is shortened, and the loss is reduced.

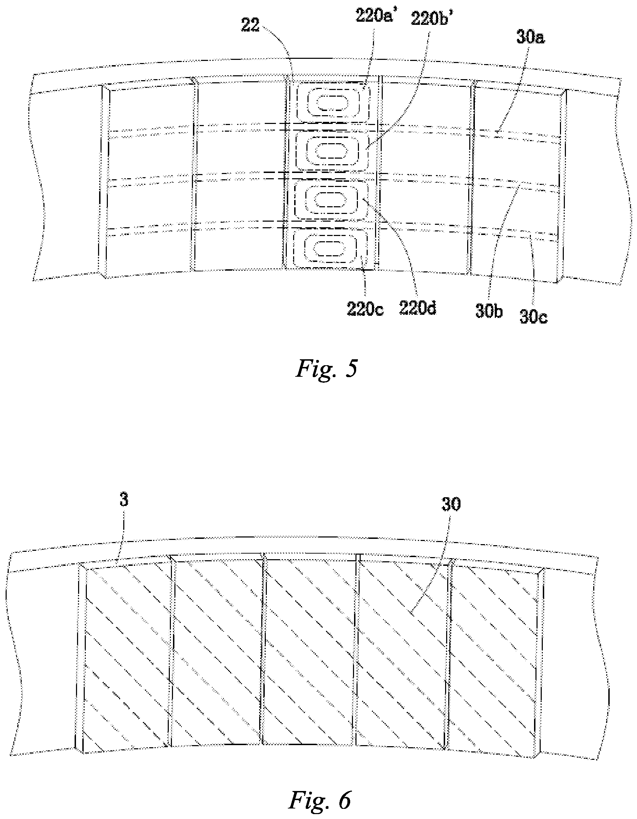

Fig. 5 is a schematic structural diagram of a part of a rotor for an electric motor according to yet another example not being part of the invention. As shown in Fig. 5, in this example, three grooves 30a, 30b, 30c are uniformly provided in the magnet area, and each of the grooves is perpendicular to the longest edge of the magnet sheet. As such, it is possible to separate the magnetic path and divide the eddy currents into four parts. For example, the eddy current in the magnet sheet 22 is divided into 220a', 220b', 220c and 220d.

Fig. 6 is a schematic structural diagram of a part of a rotor for an electric motor according to an example of the invention. In the example as shown, the grooves 30 are uniformly provided in the magnet area 3 of the inner surface of the iron core. In this example, which is not covered by the invention, a plurality of grooves are provided, and each of the grooves forms an angle of 45 degrees with the longest edge of each magnet sheet. According to the invention, the grooves form an angle of 30 degrees with the longest edge of each magnet sheet.

In the examples of the present invention, the depth and width of each groove may be set according to requirements. Although theoretically, the greater the depth and width of the groove, the more significant the effect of reducing the eddy current loss, the depth and width of the groove should be arranged appropriately taking the influence of the whole groove arrangement on the overall output of the rotor into consideration.

For example, the depth and width of the groove may be determined through simulation before the groove is arranged, so as to reduce the eddy current loss without having a great influence on the overall output of the rotor.

Similarly, it is also possible to determine the angle of the groove with the longest edge of each magnet sheet through simulation so as to obtain the desired effect.

As used herein, the "depth" of the groove refers to the depth of the groove extending into the iron core. The "width" of the groove should be understood to be the length of a side, which is perpendicular to the longitudinal direction of the groove, of a quadrangle formed by the projection of the groove in the depth direction of the groove. For example, if the groove is in the shape of a semicylinder, the width is the diameter of the cross section of the semicylinder; and if the groove is square, the width is the length of the side, which is perpendicular to the longitudinal direction of the groove, of a face of the groove perpendicular to the depth of the groove.

As a specific example, an application environment is provided as follows: the inner diameter of the rotor of an electric motor is 200 mm, and each magnet sheet has a height in a range from 35 mm to 40 mm and a width of 13 mm, and if the magnet sheets are disposed on the entire inner surface of the motor rotor, approximately 46 sheets are required. In this application environment, three grooves are uniformly arranged in the magnet area of the inner surface of the iron core of the rotor in such a manner as to be perpendicular in height to the magnet sheets (in this example, the magnet sheets are disposed on the entire inner surface of the iron core, that is, the entire inner surface of the iron core is the magnet area), each groove having a depth of 3 mm and a width of 3 mm. It will be understood by those skilled in the art that, in this environment, three grooves are uniformly arranged as shown in Fig. 4, and each magnet sheet is divided, by the three grooves, into three equal parts in the height direction of the magnet sheet.

In the rotor for an electric motor according to the present invention, only one groove or several grooves are provided in the magnet area of the inner surface of the iron core without changing the iron core to be a laminated type, thereby effectively reducing the eddy current losses at a relatively low cost.

The present invention further provides an electric motor which comprises the rotor for an electric motor of any one of the foregoing examples.

The electric motor according to the present invention may be applied to various apparatuses using an integrated electric motor, such as electric vehicles.

Although the specific embodiments of the present invention have been disclosed in the description above with reference to the accompanying drawings, it will be understood by those skilled in the art that variations or modifications may be made to the disclosed specific embodiments without departing from the scope of the present invention defined by the claims. The embodiments of the present invention are only used to illustrate, rather than to limit, the present invention.

## Claims

1. Rotor for an electric motor, comprising:
a ring shaped one-piece non-laminated rotor iron core (1) having an inner surface, wherein a magnet area (3) of the inner surface is provided with a groove (30, 30a, 30b, 30c) to reduce eddy current losses; and
a magnet part (2) disposed in the magnet area (3) of the inner surface of the iron core (1), the magnet part (2) comprising a plurality of magnet sheets (20, 21, 22, 23, 24), wherein each magnet sheet (20, 21, 22, 23, 24) has a rectangular circumferential shape which is defined by two long edges extending in parallel and two short edges extending parallel to each other and perpendicular to the long edges, wherein the magnet sheets (20, 21, 22, 23, 24) are arranged adjacently in sequence along the inner surface of the iron core (1) with the long edges bordering each other, and wherein the groove (30) forms a certain angle with the long edges of each magnet sheet (20, 21, 22, 23, 24) forming the magnet part (2), **characterised in that** the groove (30, 30a, 30b, 30c) forms an angle of 30 degrees with the longest edge of each magnet sheet (20, 21, 22, 23, 24).

2. Rotor for an electric motor of Claim 1, **characterised in that** the magnet area (3) is provided with a plurality of grooves (30a, 30b, 30c), and the plurality of grooves (30a, 30b, 30c) are uniformly distributed in the magnet area (3).

3. Rotor for an electric motor of Claim 1, **characterised in that** the magnet area (3) is provided with one groove (30), and the groove (30) is arranged in such a manner as to uniformly divide the magnet part (2).

4. Electric motor comprising the rotor for an electric motor of any one of Claims 1 to 3.

## Patentansprüche

1. Läufer für einen Elektromotor, umfassend:
einen ringförmigen, einteiligen nicht laminierten Läufereisenkern (1), der eine Innenfläche aufweist, wobei ein Magnetbereich (3) der Innenfläche mit einer Nut (30, 30a, 30b, 30c) versehen ist, um Wirbelstromverluste zu reduzieren; und
einen Magnetteil (2), der in dem Magnetbereich (3) der Innenfläche des Eisenkerns (1) angeordnet ist, wobei der Magnetteil (2) eine Mehrzahl von Magnetblechen (20, 21, 22, 23, 24) umfasst, wobei jedes Magnetblech (20, 21, 22, 23, 24) eine rechteckige Umfangsform aufweist, die durch zwei lange Kanten, die sich parallel erstrecken, und zwei kurze Kanten, die sich parallel zueinander und senkrecht zu den langen Kanten erstrecken, definiert ist, wobei die Magnetbleche (20, 21, 22, 23, 24) angrenzend aneinander nacheinander entlang der Innenfläche des Eisenkerns (1) mit den langen Kanten benachbart zueinander angeordnet sind, und wobei die Nut (30) einen gewissen Winkel mit den langen Kanten jedes Magnetblechs (20, 21, 22, 23, 24) bildet, das den Magnetteil (2) bildet, **dadurch gekennzeichnet, dass** die Nut (30, 30a, 30b, 30c) einen Winkel von 30 Grad mit der längsten Kante jedes Magnetblechs (20, 21, 22, 23, 24) bildet.

2. Läufer für einen Elektromotor nach Anspruch 1, **dadurch gekennzeichnet, dass** der Magnetbereich (3) mit einer Mehrzahl von Nuten (30a, 30b, 30c) versehen ist, und die Mehrzahl von Nuten (30a, 30b, 30c) einheitlich in dem Magnetbereich (3) verteilt sind.

3. Läufer für einen Elektromotor nach Anspruch 1, **dadurch gekennzeichnet, dass** der Magnetbereich (3) mit einer Nut (30) versehen ist, und die Nut (30) derart angeordnet ist, dass sie den Magnetteil (2) einheitlich unterteilt.

4. Elektromotor, umfassend den Läufer für einen Elektromotor nach einem der Ansprüche 1 bis 3.

## Revendications

1. Rotor pour moteur électrique, comportant :
un noyau (1) en fer de rotor non feuilleté monobloc en forme d'anneau présentant une surface intérieure, une zone (3) d'aimant de la surface intérieure étant munie d'une rainure (30, 30a, 30b, 30c) pour réduire les pertes par courants de Foucault ; et
une partie (2) d'aimant disposée dans la zone (3) d'aimant de la surface intérieure du noyau (1) en fer, la partie (2) d'aimant comportant une pluralité de feuilles (20, 21, 22, 23, 24) d'aimant, chaque feuille (20, 21, 22, 23, 24) d'aimant présentant une forme circonférentielle rectangulaire qui est définie par deux bords longs s'étendant en parallèle et deux bords courts s'étendant parallèlement l'un à l'autre et perpendiculairement aux bords longs, les feuilles (20, 21, 22, 23, 24) d'aimant étant agencées de manière adjacente en succession le long de la surface intérieure du noyau (1) en fer avec les bords longs se jouxtant les uns les autres, et la rainure (30) formant un certain angle avec les bords longs de chaque feuille (20, 21, 22, 23, 24) d'aimant formant la partie (2) d'aimant, **caractérisé en ce que** la rainure (30, 30a, 30b, 30c) forme un angle de 30 degrés avec le bord le plus long de chaque feuille (20, 21, 22, 23, 24) d'aimant.

2. Rotor pour moteur électrique selon la revendication 1, **caractérisé en ce que** la zone (3) d'aimant est munie d'une pluralité de rainures (30a, 30b, 30c), et **en ce que** la pluralité de rainures (30a, 30b, 30c) est répartie uniformément dans la zone (3) d'aimant.

3. Rotor pour moteur électrique selon la revendication 1, **caractérisé en ce que** la zone (3) d'aimant est munie d'une seule rainure (30), et **en ce que** la rainure (30) est agencée de manière à diviser uniformément la partie (2) d'aimant.

4. Moteur électrique comportant le rotor pour moteur électrique selon l'une quelconque des revendications 1 à 3.
